# EUROPEAN PATENT SPECIFICATION

(11) **EP 2 122 794 B1**
(45) Date of publication and mention of the grant of the patent: **04.07.2012**
(21) Application number: 06820569.9
(22) Date of filing: 19.12.2006
(51) Int. Cl.: H02G 15/013, H02G 15/08

(54) **CABLE GLAND FOR A HOUSING**
KABELVERSCHRAUBUNG FÜR EIN GEHÄUSE
GOUPILLE DE CÂBLE POUR UN CARTER

(43) Date of publication of application: 25.11.2009
(73) Proprietor: Prysmian Cables & Systems Limited, Eastleigh Hampshire SO50 6YU (GB)
(72) Inventor: HINES, George, Hampshire SO50 6YU (GB); GRIFFITHS, Ian, Hampshire SO50 6YU (GB); HUBBARD, Paul, Hampshire SO50 6YU (GB)
(74) Representative: Whitlock, Holly Elizabeth Ann
(86) International application number: PCT/GB2006/004758
(87) International publication number: WO 2008/074965

(56) References cited:
- WO-A-02/067400
- CH-A- 547 562
- FR-A1- 2 752 899
- GB-A- 2 204 746
- US-A1- 2002 064 363
- US-B1- 6 268 565

## Description

### Field of the Invention

The present invention relates to a cable gland. In particular, the present invention relates to a cable gland sealing and gripping mechanism, as well as to a cable gland cap arrangement.

Moreover, the present invention relates to a cable installation for anchoring a cable to an interface, e.g. an equipment enclosure wall.

Furthermore, the present invention relates to a method of installing a cable through an interface.

### Background to the Invention

A cable gland is a device which is designed to allow a cable to pass from one side of an interface to another side of the same interface while creating a seal around the cable. The interface can be, for instance, a wall of a sealed enclosure, such as an electrical box or an electric equipment, or any other type of interface through which the cable may be required to pass. The cable gland generally provides for a sealing action, thereby preventing water or moisture from passing through the interface and from entering the sealed enclosure. Moreover, the cable gland also provides for a retention action, thereby acting as a cable anchor and strain reliever to prevent damage to the cable and any connections associated thereto due to any possible movement of the cable. A cable gland can be used to surround any kind of cable, e.g. an electrical cable or a fibre optic cable. Preferably, the cable is a fibre optic cable.

Document US 2005/0161247 relates to a through-fitting for sealing around a cable or the like (e.g. a tube or a sensor). The through-fitting comprises a stub having a bore; an annular seal within the bore; and a cap in threaded engagement with the stub. The cap is movable between two different positions and a sleeve is disposed within the bore, the sleeve being movable axially within the bore relative to the annular seal in response to the cap motion. When the cap is in a second position, the end surface of the sleeve compresses the seal radially inwardly. Document US 2005/0161247 discloses a gripping mechanism which provides for one gripping point onto the cable.

Document US-4,717,792 relates to a sealed jointing apparatus for use in the connection of conduit sections at a connection zone. The apparatus comprises: an annular casing having open ends; spaced end closures at the end of the casing, and defining with the casing a connection zone into which conduit sections pass for jointing; and releasable securing means for releasably securing at least one of the end closures to the casing. The releasable securing means comprise an end cap including two radially spaced coupling threads, one of which engaging an external thread on the casing while the other engaging an internal thread on said one end closure whereby the casing is releasably coupled to said one end closure. The apparatus comprises a gland seal which comprises a sealing ring applying a pressure to an O-ring that seals against the cable sheath. Document US-4,717,792 provides for one sealing point onto the cable.

Document US-6,870,106 relates to mechanisms and methods for facilitating connection of a telecommunications cable to outside plant equipment. This document discloses a cable or a cable section having an adjustable strain relief feature on an enclosure interface portion. The strain relief is enabled by a strain relief nut and cable strain relief mechanism. The cable section includes an adaptor plate so that the cable may be attached to a telecommunications equipment enclosure, e.g. a repeater enclosure. A sealing gasket and an O-ring seal are positioned between the cable section and the equipment enclosure. The strain relief nut can be adjusted axially along the cable by screwing into the cable strain relief. Adjusting the strain relief nut moves the grip point of the nut up and down the length of the cable to a desired position. Document US-6,870,106 discloses only one axial grip point and, moreover, it discloses only one cable gripping feature which provides a strain relief action only inside or outside of the equipment enclosure.

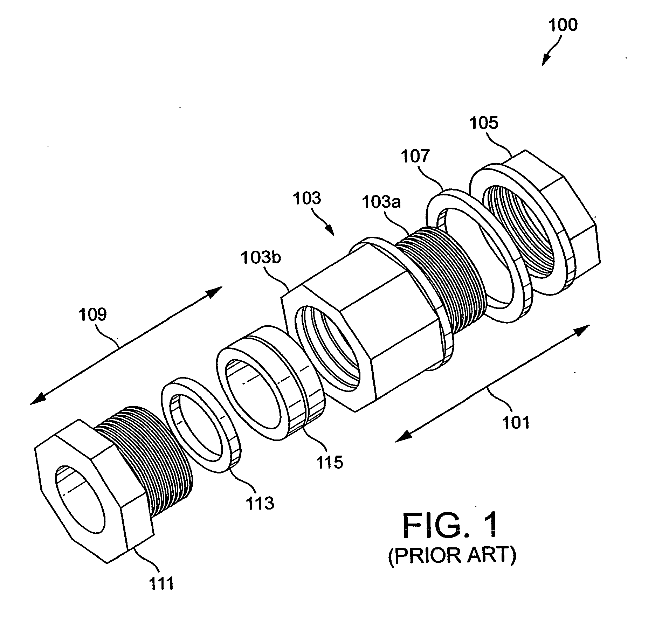

A cable gland known in the art is shown, for example, in Figures 1 to 3.

In detail, Figure 1 shows an exploded perspective view of a cable gland 100 which comprises a locking nut assembly 101 and gland assembly 109. The locking nut assembly 101 comprises a central screw thread 103, a locking nut 105 and a locking nut washer 107. The gland assembly 109 comprises a compression nut 111, a compression washer 113 and a rubber gland (i.e. a sealing element) 115.

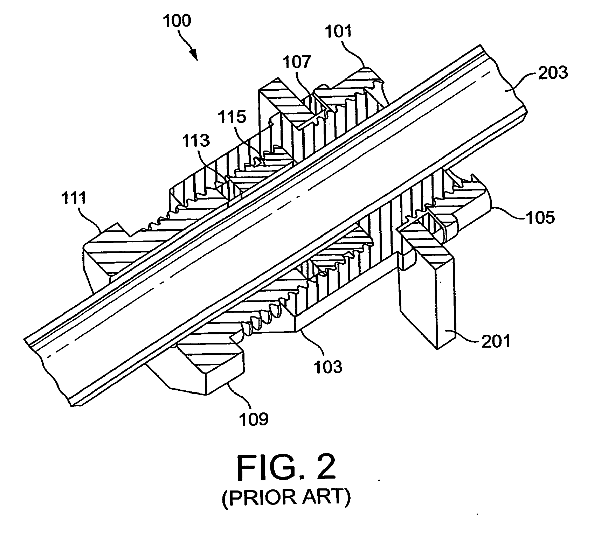

Figure 2 shows a partially cross-sectioned longitudinal view of the cable gland 100 of Figure 1 when coupled to an interface 201 of an equipment enclosure (not shown in the figure). A cable 203 is shown to pass through the assembled cable gland 100, the latter being inserted into a hole possessed by the interface 201.

The central screw thread 103 is provided with a first portion 103a and a second portion 103b, said portions being axially adjacent along the cable gland longitudinal axis. The first portion 103a has a tubular shape and is provided with an external diameter which substantially corresponds to the inner diameter of the hole possessed by the interface 201. The outer surface of the first portion 103a is threaded for allowing the locking nut 105 to be screwed onto said first portion 103a. The second portion 103b has a tubular shape and is provided with an external diameter which is greater than the inner diameter of the hole possessed by the interface 201. The inner surface of the second portion 103b is threaded for allowing the compression nut 111 to be screwed into said second portion 103b.

The cable gland 100 is affixed to the interface 201 by placing the first portion 103a of the central screw thread 103 through the hole of the interface 201 on one side thereof. Preferably, the first portion 103a is positioned to be located inside the equipment enclosure having the interface 201. Alternatively, the first portion 103a is positioned to be located outside the equipment enclosure having the interface 201. Successively, the locking nut washer 107 is placed over the first portion 103a of the central screw thread 103 so as to adhere to the interface 201. The locking nut 105, which is provided with an internal screw thread that matches the outer screw thread of the first portion 103a, is then screwed onto said first portion 103a of the central screw thread 103 so as to couple the locking nut assembly 101 to the interface 201. The locking nut washer 107 provides a seal to stop moisture and/or water passing through the hole of the interface 201 via the outer surface of the central screw thread 103.

Once the locking nut 101 is associated to the interface 201, the cable 203 is passed through the locking nut assembly 101 from the external side of the interface 201 (i.e. from the outside of the equipment enclosure) to the internal side of the interface 201 (i.e. to the inside of the equipment enclosure).

Then the gland assembly 109 is fit to the cable 203 such that the latter is gripped by the gland assembly 109 and anchored to the interface 201. In detail, as better shown in Figure 2, the rubber gland 115 and the compression washer 113 are located to surround the cable 203 and then introduced into the second portion 103b of the central screw thread 103. The outer diameter of the rubber gland 115 is smaller than the inner diameter of the second portion 103b of the central screw thread 103 such that the rubber gland 115 can be located radially inside the second portion 103b of the central screw thread 103. The outer diameter of the compression washer 113 is identical to the outer diameter of the rubber gland 115 so that, when the compression nut 111 is placed to surround the cable 203 and is screwed into the second portion 103b of the central screw thread 103, the compression washer 113 is axially forced against the rubber gland 115 in the direction of the screw thread flow, i.e. the compression force applied to the rubber gland 115 is in a direction parallel to the cable longitudinal axis. As the compression nut 111 is further tightened, the rubber gland 115 is compressed and a seal is caused to be formed circumferentially around the cable 203 and axially along the whole length of the rubber gland 115.

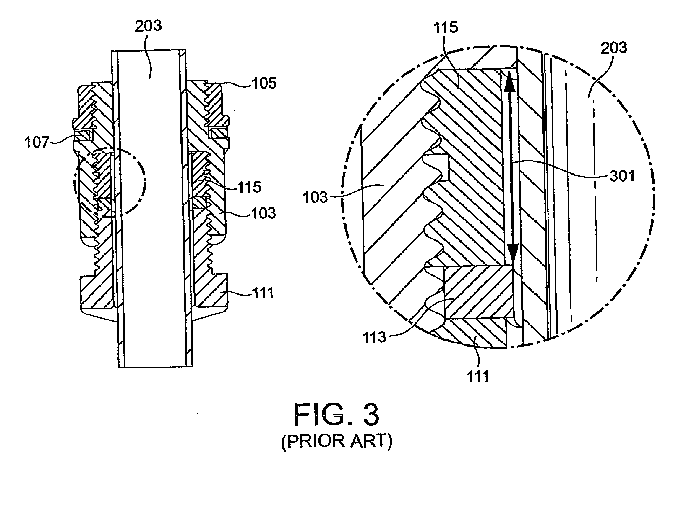

Figure 3 shows the sealing and gripping area of the cable gland 100 shown in Figure 1. As indicated by the arrow 301 in the cut out view of Figure 3, the rubber gland 115 seals and grips along the majority of its axial length, said sealing and gripping actions being applied circumferentially around the cable 203.

The Applicant has noticed that the cable glands known in the art provide for a sealing and gripping mechanism - on the cables which they are coupled to - only on one side of the equipment enclosure interface, i.e. inside or outside said enclosure depending on the orientation of the cable gland.

Furthermore, the Applicant has observed that, according to the cable glands known in the art, since the gripping force is distributed - circumferentially around the cable - substantially along the whole axial length of the rubber gland, said gripping force is spread over a relatively large area, thereby resulting in a weak gripping force which is locally applied onto the cable length. The Applicant has observed that in the event the cable is moved (e.g. the cable is pulled during installation thereof), the gripping force may not be sufficient to stop the cable from slipping through the cable gland and damages can occur to any connection which is possibly present within the equipment enclosure to which the cable gland is associated. Furthermore, in the event the cable is pulled and slips through the cable gland, leakage of the cable gland can occur and water or moisture can ingress into the equipment enclosure along the gripping and sealing area.

The Applicant has further noticed that the cable glands known in the art, once installed at an equipment enclosure interface, cannot provide for a sealing and gripping mechanism between the inside and the outside of said equipment enclosure until a cable is introduced into the cable gland and the cable gland is tightened. The Applicant has observed that in order for the equipment enclosure interface not to be breached by moisture passing through the cable gland in the open condition, the cable gland has necessarily to be fit to the equipment enclosure interface at the same time the cable is fit into the cable gland. In other words, the Applicant has noticed that, according to the cable glands known in the art, it is not possible for the manufacturers to provide a cable gland pre-fitted to an enclosure interface since the sealing from inside to outside of the enclosure can be ensured only when the cable is already associated to the cable gland.

Moreover, the Applicant has noticed the cable glands known in the art are suitable for being fit onto cables of a predetermined size (i.e. a predetermined cable outer diameter). In fact, the Applicant has observed that all the constitutive components of a cable gland known in the art are required to be changed when using different sized cabling. This aspect inevitably results in the need of stocking a plurality of cable gland constitutive components of different sizes in order to be correctly coupled with cables of corresponding different sizes. However, the need of providing a plurality of cable gland constitutive components of different sizes as well as the need of providing storing thereof considerably contribute in increasing the cable glands manufacturing and installation costs.

US 6,268,565 relates to a cable sealing arrangement including a fitting, two sealing members and two nuts. The sealing arrangement provides multiple redundant seals defined by the interfaces of tapered surfaces on the sealing members and the fitting, as well as the interfaces of tapered surfaces on the sealing members and the nuts. By tightening the nuts onto the fitting, the nuts cause compression of the sealing members, resulting in tight engagement of a cable.

WO 02/067400 A relates to a cable gland assembly for an electric cable. The assembly comprises a body and a barrier sleeve in the body, and a hardenable compound disposed in the sleeve, and the sleeve comprises a resilient or elastic material.

GB 2 204 746 A relates to a cable gland comprising a gland sleeve, a compression collar axially movable with respect to the sleeve, a sealing ring and a set of nested inter-engaging skid washers. When the compression collar is tightened on the sleeve, a flange engages the outermost one of the skid washers and thus a compressive force is transmitted from the compression ring to the sealing ring which deforms radially inwardly into sealing engagement with the cable.

CH 547 562 relates to a device for terminating a cable and grounding the sheath of the cable. The device includes a sheath, an O ring surrounding an insulating sleeve of the cable, and an elastic sleeve surrounding the insulating sleeve.

### Summary of the Invention

The Applicant has found that the gripping and sealing force which is exerted by a cable gland onto a cable - to which the cable gland is associated - can be advantageously improved by applying a predetermined circumferential force at the axial ends of the sealing element which is a constitutive component of the cable gland. More specifically, the Applicant has found that the gripping and sealing force which is transferred by a cable gland onto the cable can be advantageously increased by directing the gripping and sealing force onto two distinct gripping circumferential areas which are defined in correspondence of the axial ends of the sealing element possessed by the cable gland.

The Applicant has found that the gripping and sealing force exerted by the cable gland can be locally concentrated at the axial ends of the sealing element possessed by the cable gland by surrounding the sealing element with at least two compression elements. Said at least two compression elements are axially aligned along the cable gland longitudinal axis and are superimposed to the sealing element so as to cause the latter to collapse around the cable at two gripping circumferential areas defined in correspondence of the sealing element axial ends.

In particular, the Applicant has found that a cable gland can provide for an improved gripping and sealing force onto a cable (thanks to the compressive force acting onto the sealing element possessed by the cable gland) not only by ensuring that said force is applied along the whole axial length of the sealing element, but also providing that a further compressive force is applied at two predetermined gripping circumferential areas which are defined in correspondence of the sealing element axial ends.

According to a first aspect, the present invention provides a cable gland as set out in claim 1.

The Applicant has also found that it is possible to provide for a sealing mechanism between the inside and the outside of an equipment enclosure - to which a cable gland is fit - before a cable is introduced into the cable gland by providing the latter with a cap at both the axial ends of the cable gland, said cap preventing moisture and/or water from passing through the cable gland and thus from entering into the equipment enclosure.

The Applicant has found that by providing said cap with at least one line of weakness, at least one specific portion of the cap can be suitably detached so that a cable can be easily and safely introduced into the cable gland at the time actually desired by the installer.

It is advantageously possible to pre-fit a cable gland to an equipment enclosure, i.e. to provide the latter with a cable gland, at a time before the cable installation step is carried out. This aspect is particularly desirable by the installers since, thanks to the cable gland of the present invention, the cable gland installation step can be carried out independently from the cable installation step. For instance, it is advantageously possible to install an equipment enclosure, e.g. a tube distribution closure, already provided with at least one cable gland associated thereto and to provide for the installation of the cables (or of at least one cable) at a later time, when a further cable is actually needed.

A tube distribution closure is a fully sealed watertight closure which is typically used for intercepting or distributing tubes possessed by blown optic fibre cables. Preferably, said closure comprises: a) one in-line port, at each axial end of the closure, said in-line port being capable of accommodating a cable of up to 24 tubes; b) two drop ports, at each axial end of the closure, said drop ports being capable of accommodating cables of up to 12 tubes; and c) a 3 drop ports, at each lateral side of the closure, said drop ports being capable of accommodating cables of up to 4 tubes. A pressure relief valve is also generally incorporated into said closure so as to prevent accidental over-pressurisation to occur.

The Applicant has also found that a cable gland can advantageously provide for a sealing action and gripping mechanism on a cable on both sides of the enclosure interface, i.e. inside and outside the equipment enclosure to which the cable gland is associated, by providing the cable gland with two distinct sealing elements to be arranged upstream and downstream from the enclosure interface, respectively. A cable gland which comprises two sealing elements to be located, respectively, on a first side and on a second side of the equipment enclosure interface, each sealing element cooperating with respective compression elements, ensures an improved cable anchorage and sealing mechanism with respect to the cable glands known in the art.

According to another aspect, the present invention relates to a cable installation as set out in claim 11 and to a method as set out in claim 12.

### Brief Description of the Drawings

Preferred embodiments of the present invention will now be described by way of example only, with reference to the accompanying drawings, in which:
Figure 1 shows an exploded perspective view of a cable gland known in the art;
Figure 2 shows a partially cross-sectioned longitudinal view of the cable gland of Figure 1;
Figure 3 shows a magnified view of the gripping sealing area of the cable gland of Figure 1;
Figure 4 shows an exploded perspective view of a cable gland according to an embodiment of the present invention;
Figure 5a shows a partial cross-sectional plan view of the cable gland of Figure 4;
Figure 5b shows the gripping and sealing areas of the cable gland of Figure 4;
Figure 6 shows the sealing and gripping mechanism of the cable gland of Figure 4;
Figures 7A-D show partial cross-sectional plan view of different cable gland arrangements which are suitable for different sized cables according to the present invention;
Figure 8A shows an exploded perspective view of some constitutive components of a cable gland according to an embodiment of the present invention;
Figure 8B shows an assembled perspective view of the cable gland of Figure 4;
Figure 9 shows a perspective view of a lower washer according to an embodiment of the present invention;
Figure 10 shows a first perspective view of an upper washer according to an embodiment of the present invention;
Figure 11 shows a second perspective view of an upper washer according to an embodiment of the present invention;
Figures 12 and 13 show two perspective views of a cable gland cap according to an embodiment of the present invention;
Figure 14 shows an exploded perspective view of a cable gland according to a further embodiment of the present invention, and
Figure 15 shows a partially sectioned longitudinal plan view of the cable gland of Figure 14 associated to an equipment enclosure.

### Detailed Description of the Preferred Embodiments

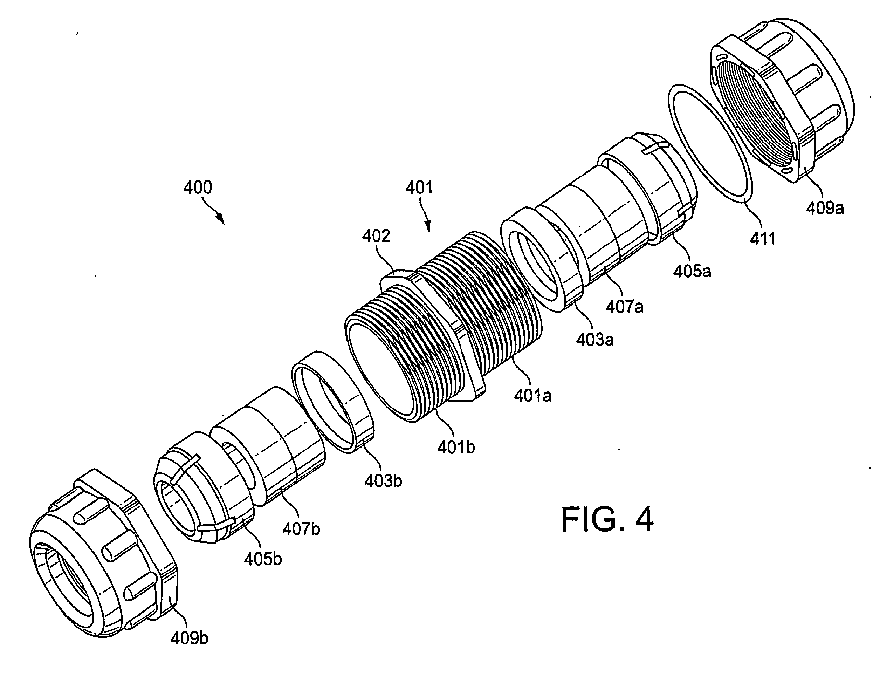

Figure 4 shows an exploded perspective view of a cable gland 400 according to a preferred embodiment of the present invention.

The cable gland 400 comprises a central screw thread 401 (also referred to as central screw mount) which is provided with a flange 402 that is located half way with respect to the central screw thread longitudinal extension. In other words, the flange 402 is positioned at about the centre of the central screw thread axial length. The central screw thread 401 has a tubular shape, the outer surface of which is provided with a screw thread that is formed along the central screw thread axial length. The central screw thread 401 is separated into two tubular sections 401a, 401b by the flange 402, the latter providing a surface which abuts an interface (e.g. an interface of an equipment enclosure) when the cable gland is fit thereto. Therefore, the central screw thread 401 provides an anchoring element for fixing the cable gland 400 to the interface. Preferably, the central screw thread 401 is made of a plastic material.

According to the preferred embodiment of the present invention shown in Figure 4, on each side of the flange 402 the cable gland 400 is provided with a sealing element (407a; 407b - in the following indicated as tubular gland) as well as with first (403a) and second (405a) compression elements (in the following indicated as lower washer and upper washer, respectively) surrounding said sealing element. The upper washer 405a is generally indicated by the technicians as grip washer. The lower washer 403a is generally indicated by the technicians as slip washer. The sealing element 407a is generally indicated by the technicians as collar.

In detail, on a first side of the flange 402, the cable gland 400 comprises a first tubular gland 407a, a first lower washer 403a (first compression element) and a first upper washer 405a (second compression element). Preferably, the first tubular gland 407a is made from a polymeric material. More preferably, the first tubular gland 407a is made from rubber. Preferably, the first upper and lower washers 403a, 405a are made from a plastic material.

Analogously, on a second side of the flange 402, the cable gland 400 comprises a second tubular gland 407b, a second lower washer 403b (third compression element) and a second upper washer 405b (fourth compression element). Preferably, the first tubular gland 407a is identical to the second tubular gland 407b. Preferably, the first lower washer 403a is identical to the second lower washer 403b. Preferably, the first upper washer 405a is identical to the second upper washer 405b.

The first tubular gland 407a and the second tubular gland 407b provide a sealing and gripping mechanism for allowing seals to be formed around the outer surface of the cable which is fit to the cable gland 400.

The lower washers 403a, 403b and the upper washers 405a, 405b provide compression elements which allow compression forces to be transferred to specific circumferential areas of the first and second tubular glands 407a, 407b, as better detailed in the following of the present description.

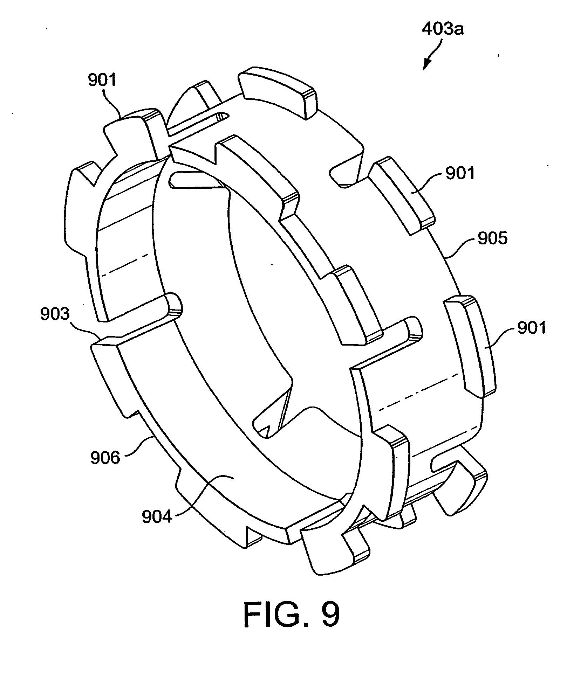

The first lower washer 403a (which is preferably identical to the second lower washer 403b) is shown in more detail in Figure 9. The first lower washer 403a is substantially annular in shape. The first lower washer 403a is provided with protrusions 901 which are located in correspondence of the circumferential edges 905, 906 of the first lower washer 403a. The protrusions 901 extend in a radial direction with respect to the outer annular surface of the first lower washer 403a, i.e. said protrusions are substantially perpendicular to said outer annular surface. Preferably, the protrusions 901 are evenly distributed along the circumferential edges 905, 906 of the first lower washer 403a. The protrusions 901 are provided so as to ensure that the first lower washer 403a is securely fit inside corresponding recesses possessed by the central screw thread 401.

Moreover, the inner annular surface of the first lower washer 403a (i.e. the washer surface which faces and at least partially comes into contact with the first tubular gland 407a) is provided with grooves 903 which start from the circumferential edges 905, 906 and extend along the longitudinal length of the first lower washer 403a. Preferably, the grooves 903 extend for the whole thickness of the first lower washer 403a.

Furthermore, the inner annular surface of the first lower washer 403a comprises a mating surface 904 which is provided by a chamfered edge, the function of said mating surface 904 being illustrated in the following of the present description.

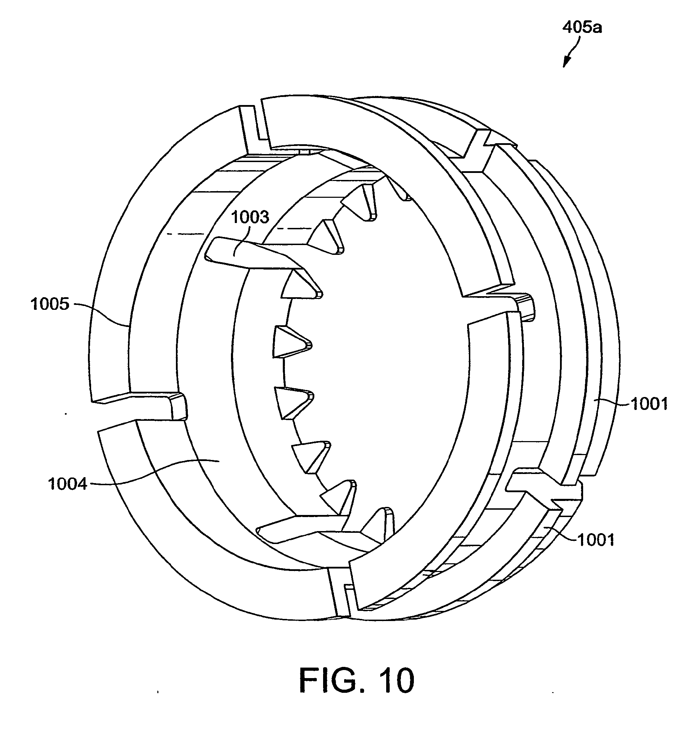

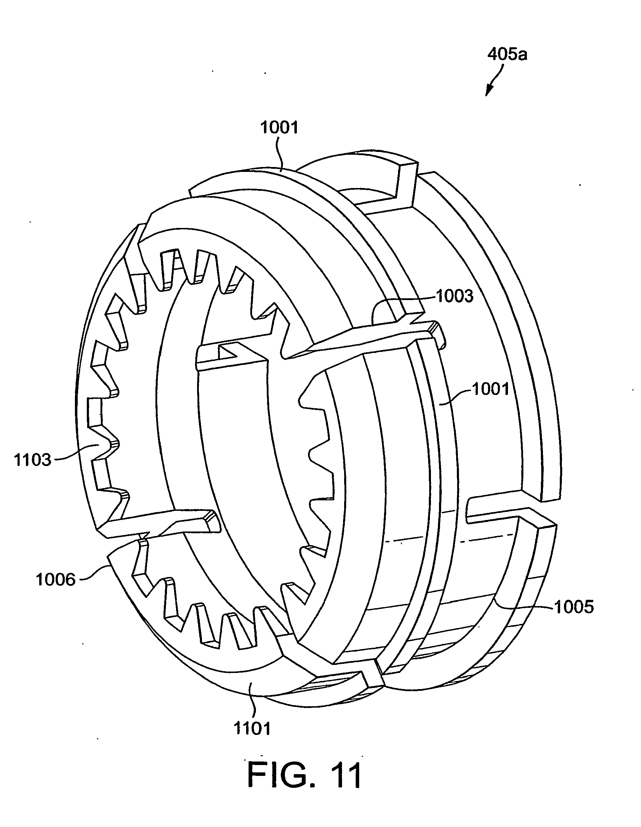

The first upper washer 405a (which is preferably identical to the second upper washer 405b) is shown in more detail in Figures 10 and 11. The first upper washer 405a is substantially annular in shape. The first upper washer 405a is provided with protrusions 1001 that are located along an outer circumference of the first upper washer annular portion. Preferably, the protrusions 1001 are evenly distributed along a circumference located half way with respect to the first upper washer axial length. The protrusions 1001 extend in a radial direction with respect to the outer annular surface of the first upper washer 405a, i.e. said protrusions are substantially perpendicular to said outer annular surface. The protrusions 1001 allow the first upper washer 405a to sit securely within recesses provided in the radially inner surface of the central screw thread 401.

The inner annular surface of the first upper washer 405a (i.e. the washer surface which faces and at least partially comes into contact with the first tubular gland 407a) is provided with grooves 1003 that start from the circumferential end edges 1005, 1006 and extend along the longitudinal length of the first upper washer 405a. Preferably, the grooves 1003 extend for the whole thickness of the first upper washer 405a. The inner annular surface comprises a mating surface 1004 which is provided by a chamfered edge, the function of said mating surface 1004 being illustrated in the following of the present description.

Figure 11 shows the first upper washer 405a according to a different angular orientation with respect to that shown in Figure 10. As better represented in Figure 11, the first upper washer 405a is provided with a further chamfered edge which defines a further mating surface 1101, the function of which is illustrated in the following of the present description. The further mating surface 1004 is provided on the radially outer surface of the first upper washer 405a. As better shown in Figure 11, the first upper washer 405a is provided with a plurality of teeth 1103 which protrude from the circumferential end edge 1006 and are directed towards the centre of the annular portion of the first upper washer 405a. The function of the teeth 1103 is described in more detail in the following of the present description.

The cable gland 400 according to the embodiment shown in Figure 4 further comprises one O-ring 411 to be positioned on one side of the flange 402 of the central screw thread 401. In detail, O-ring 411 is provided to be located between the flange 402 of the central screw thread 401 and an interface of an equipment enclosure to which the cable gland is fit so as to provide a seal between the cable gland and said interface.

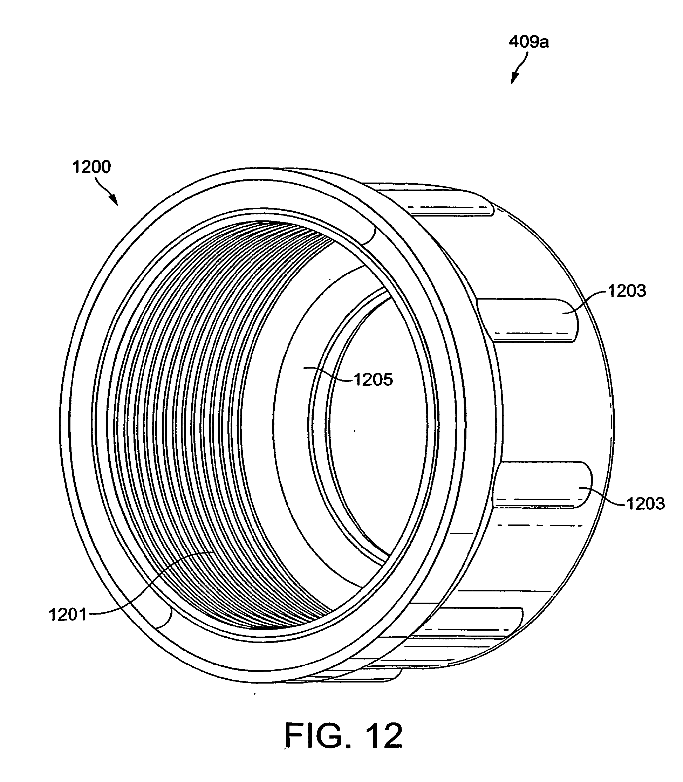

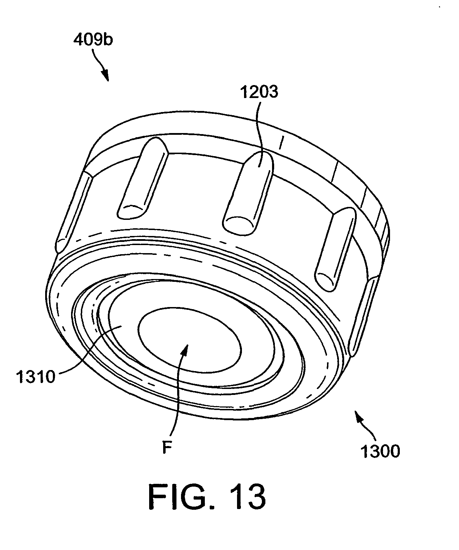

According to the embodiment shown in Figure 4, the cable gland 400 comprises a first gland cap 409a and a second gland cap 409b. Figures 12 and 13 show in greater detail two different perspective views of the first gland cap 409a. Preferably, the second gland cap 409b is identical to the first gland cap 409a. As shown in Figures 12 and 13, the first gland cap 409a is substantially C-shaped and is provided with an open end 1200 which is suitable for engaging with the central screw thread 401 (in particular, with the first tubular section 401a of the central screw thread 401). The first gland cap 409a is provided with a closed end 1300 which comprises an external end surface 1310, the latter being axially opposite to the open end 1200.

The inner surface of the annular portion of the first gland cap 409a is provided with a screw thread 1201 which complements the external screw thread of the central screw thread 401 so that the first gland cap 409a (and analogously the second gland cap 409b) can be secured to the central screw thread 401.

The outer surface of the first gland cap 409a is provided with raised portions 1203 so that a gripping surface is formed which provides additional grip for the user when screwing the gland cap 409a onto the central screw thread 401. Preferably, the raised portions 1203 extend in the cable gland axial direction. Preferably, the raised portions 1203 are circumferentially distributed along the outer surface of the first gland cap 409a. More preferably, the raised portions 1203 are evenly distributed in the circumferential direction along the outer surface of the first gland cap 409a.

The first gland cap 409a is further provided with an inner chamfered edge which is formed on the inner surface of the first gland cap 409a. The inner chamfered edge, which is axially adjacent to the screw thread 1201, forms a mating surface1205, the function of which will be better explained in the following of the present description.

Preferably, the first gland cap 409a is made from a plastic material.

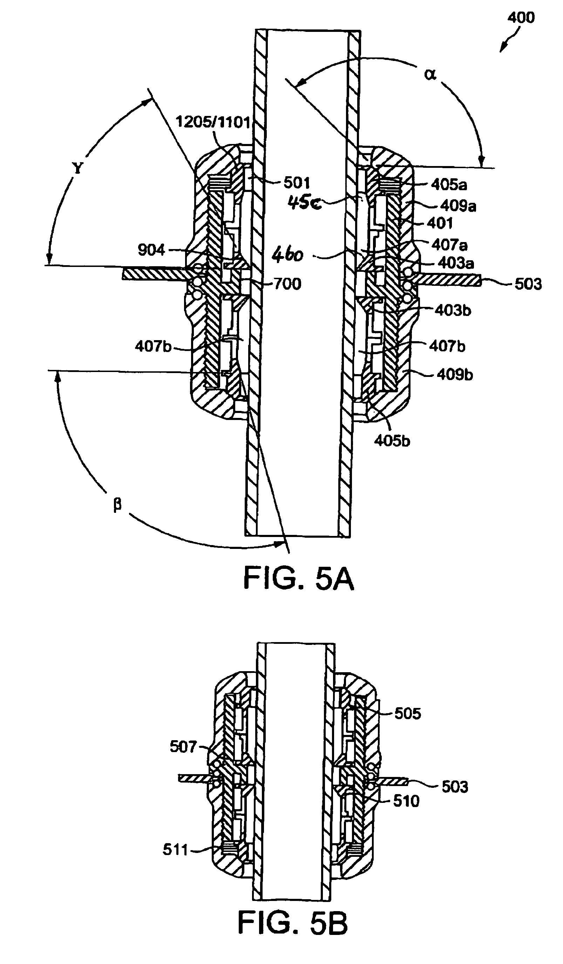

As shown in Figure 5a (for instance), the central screw thread 401 is provided with an internal portion 700 which defines an internal annular portion, the axial (longitudinal) extension of which is predetermined in order to take into account the thickness of the interface equipment enclosure to which the cable gland 400 is associated. Preferably, the central screw thread 401 is a standard constitutive component of the cable gland, thereby being suitable to be coupled to equipment enclosures having interfaces of different thicknesses. However, in order to better fit particular interface thicknesses, it is also possible to add a further compression element which acts as a spacer, thereby ensuring a greater variation of the interface thickness.

The sealing and gripping mechanism according to the cable gland of the present invention will now be described in more detail.

Figure 5a shows a partially cross sectioned longitudinal view of a cable gland 400 according to an embodiment of the present invention. In Figure 5a the cable gland 400 is shown to be fit to an interface 503 of an equipment enclosure (not shown), a cable 501 being shown to be positioned inside the cable gland 400. The cable 501 - to which the cable gland 400 is associated - can be any kind of cable, e.g. an electrical cable or a fibre optic cable. Preferably, the cable 501 is a fibre optic cable.

The sealing and gripping mechanism is described in relation to one end of the cable gland 400, i.e. to the cable gland portion which is located at one side of the flange 402 of the central screw thread 401. However, the same mechanism applies also to the corresponding components at the other end of the cable gland 400, i.e. to the further cable gland portion which is located at the other side of the flange 402 of the central screw thread 401.

According to the present invention, the mating surface 1205 provided on the first gland cap 409a (in the following the mating surface 1205 will be indicated as first mating surface) is arranged to mate with the mating surface 1101 provided on the first upper washer 405a (in the following the mating surface 1101 will be indicated as second mating surface) such that, when the first gland cap 409a is screwed onto the central screw thread 401, a first force is applied to the first upper washer 405a via the first gland cap 409a, specifically via the contacting first mating surface 1205 and second mating surface 1101. Said first force is typically a compressive force which is exerted along the contacting mating surfaces 1205, 1101.

Moreover, due to the screwing action of the gland cap 409a onto the central screw thread 401 through the contacting mating surfaces 1205, 1101, the first upper washer 405a is pushed towards the first lower washer 403a until they come into contact with each other. In other words, the first force mentioned above causes the first upper washer 405a to axially move towards the first lower washer 403a. In detail, the movement of the first upper washer 405a is a translational movement in a direction substantially parallel to the cable longitudinal axis. The first upper washer 405a stops when it comes into contact with the first lower washer 403a.

The chamfered edge, which forms the first mating surface 1205 on the first gland cap 409a, is inclined of an angle α with respect to a direction perpendicular to the cable longitudinal direction, said angle being calculated in the counter-clockwise direction starting from the direction perpendicular to the cable longitudinal direction. Preferably, α is comprised from about 130° to about 140°. More preferably, α is about 135°. According to the present invention, the inclined first mating surface 1205 and the inclined second mating surface 1101 allow a predetermined compressive force to be suitably directed from the gland cap 409a towards the first upper washer 405a so that the latter can suitably act onto the first tubular gland 407a as better explained in the following of the present description.

Upon the application of the first force mentioned above, the mating surface 1004 - said mating surface 1004 being formed by the chamfered edge provided on the radially inner surface of the first upper washer 405a (in the following the mating surface 1004 will be indicated as third mating surface) - applies a second force to a first axial end 450 of the first tubular gland 407a. The first axial end 450 of the first tubular gland 407a is the end axially distanced from (i.e. opposite to) the interface 503 of the equipment enclosure.

The chamfered edge, which forms the third mating surface 1004 on the radially inner surface of the first upper washer 405a, is inclined of an angle β with respect to a direction perpendicular to the cable longitudinal direction. The angle β is calculated in the counter-clockwise direction starting from the direction perpendicular to the cable longitudinal direction. Preferably, β is comprised from about 100° to about 110°. More preferably, β is about 105°.

As the first upper washer 405a and the first lower washer 403a comes into contact with each other (when the gland cap 409a has completed its run and is completely screwed onto the central screw thread 401), the axial component of the second force mentioned above causes the first tubular gland 407a to be compressed against the mating surface 904 which is provided on the radially inner surface of the first lower washer 403a. In the following the mating surface 904 will be indicated as fourth mating surface.

Moreover, according to the present invention, thanks to the presence of the angled (inclined) third mating surface 1004 possessed by the first upper washer 405a and abutting the first axial end 450 of the first tubular gland 407a, the radial component of the second force advantageously causes a first circumferential force to be applied at said first axial end 450.

The direction of said second force is comprised from about 70° to about 80° with respect to the cable longitudinal direction, said angle being calculated in the counter-clockwise direction starting from the force direction. According to the specific embodiment shown in Figure 5a, the second force is applied at an angle of approximately 75° with respect to the cable longitudinal direction.

The chamfered edge, which forms the fourth mating surface 904 on the first lower washer 403a, is inclined of an angle γ with respect to a direction perpendicular to the cable longitudinal direction, said angle being calculated in the counter-clockwise direction starting from the direction perpendicular to the cable longitudinal direction.. Preferably, γ is comprised from about 55° to about 65°. More preferably, γ is about 60°.

According to the present invention, the distance between the third mating surface 1004 on the first upper washer 405a and the fourth mating surface 904 on the first lower washer 403a, when the first upper and lower washers are in contact with each other, is lower than the longitudinal length of the first tubular gland 407a since the latter is in a compressed state (the first tubular gland 407a is tightly compressed around the cable 501).

The contact between the first upper washer 405a and the first lower washer 403a (and thus the compression of the first tubular gland 407a against the fourth mating surface 904) causes a third force to be exerted by the first lower washer 403a onto the first tubular gland 407a.

The axial component of said third force causes the first tubular gland 407a to be compressed, while, according to the present invention, thanks to the presence of the angled fourth mating surface 904 possessed by the first lower washer 403a and abutting the second axial end 460 of the first tubular gland 407a, the radial component of the third force advantageously causes a second circumferential force to be applied at said second axial end 460. The second axial end 460 of the first tubular gland 407a is the end axially adjacent to the interface 503 of the equipment enclosure.

The direction of said third force is comprised from about 55° to about 65° with respect to the cable longitudinal direction, said angle being calculated in the counter-clockwise direction starting from the cable longitudinal direction. According to the specific embodiment shown in Figure 5a, the third force is applied at an angle of approximately 60° with respect to the cable longitudinal direction.

The first, second and third forces mentioned above cause the first tubular gland 407a to apply a gripping and sealing force onto the cable 501 along the axial length of the first tubular gland 407a.

Moreover, as mentioned above, according to the present invention, thanks to the presence of the angled mating surfaces 1205, 1101, 1004, 904, first and second circumferential forces are also advantageously applied to the first 450 and second 460 axial ends of the first tubular gland 407a, respectively. Said first and second circumferential forces cause the first tubular gland 407a to further grip and seal the cable 501 at two distinct circumferential gripping areas which are distributed around the cable outer surface, in correspondence of both axial ends 450, 460 of the first tubular gland 407a.

The first and second circumferential forces are applied at the areas 1 and 2 respectively, as shown in Figure 5a.

Figure 5b schematically shows the gripping area 505, which is obtained on the cable 501 by the first circumferential force, and the gripping area 507, which is obtained on the cable 501 by the second circumferential force.

The second lower washer 403b, the second tubular gland 407b, the second upper washer 405b and the second gland cap 409b - which form the second portion of the cable gland 400 - apply a third and fourth circumferential forces on the cable 501 on the second side of the interface 503 in the same manner as described above with respect to the first side of the interface.

Figure 5b schematically shows the gripping area 510, which is obtained on the cable 501 by the third circumferential force, and the gripping area 511, which is obtained on the cable 501 by the fourth circumferential force, the third and fourth circumferential forces being applied at the areas 3 and 4 respectively, as shown in Figure 5a.

Therefore, Figure 5b shows the four distinct sealing and gripping areas 505, 507, 510, 511 that are located and circumferentially distributed on the outer surface of the cable 501. According to the present invention, two distinct circumferential forces are applied to the cable 501 on one side of the interface 503 and two further distinct circumferential forces are applied to the cable 501 on the other side of the interface 503. In this manner, the cable gland of the present invention allows that additional sealing and grip can be applied to the cable with respect to the cable glands known in the art, said additional sealing and grip advantageously contributing in increasing the anchorage effect and thus advantageously contributing in reducing the chances of the cable to be moved from its correct position within the cable gland, e.g. when the cable is pulled during installation thereof.

Moreover, the cable gland of the present invention provides a sealing action on both sides of the interface 503 of the equipment enclosure such that a seal is provided around the cable both within and outside the equipment enclosure.

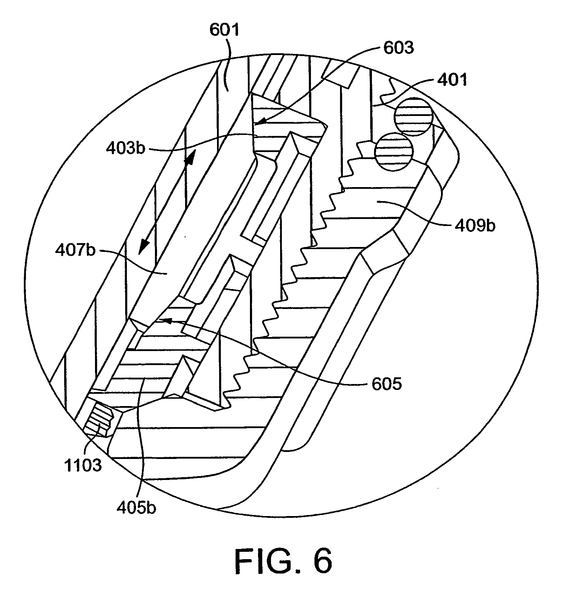

In detail, Figure 6 schematically shows the gripping area of the second tubular gland 407b along its length, as indicated by the arrow 601. Furthermore, arrows 603 and 605 schematically show the two distinct gripping points where the third circumferential force and the fourth circumferential force are applied due to the pressure exerted on the second tubular gland 407b by the second lower washer 403b and the second upper washer 405b, respectively.

As mentioned above, according to a preferred embodiment of the present invention, the first upper washer 405a and the second upper washer 405b comprise a gripping element for increasing the gripping action onto the first tubular gland 407a and the second tubular gland 407b, respectively. According to a preferred embodiment of the present invention, the gripping element comprises teeth 1103, as better shown in Figures 6 and 11. As mentioned above, the teeth 1103 are arranged to be substantially perpendicular to the cable longitudinal direction so that, when the first mating surface 1205 of the gland cap meets the second mating surface 1101 of the upper washer, the first circumferential force causes the teeth to sink into the outer surface of the cable 501. Therefore, according to the present invention, the gripping element provides for an additional grip on the cable which suitably increases anchorage thereof, thereby preventing the cable 501 from moving when introduced into the cable gland 400 and when correctly positioned inside the equipment enclosure.

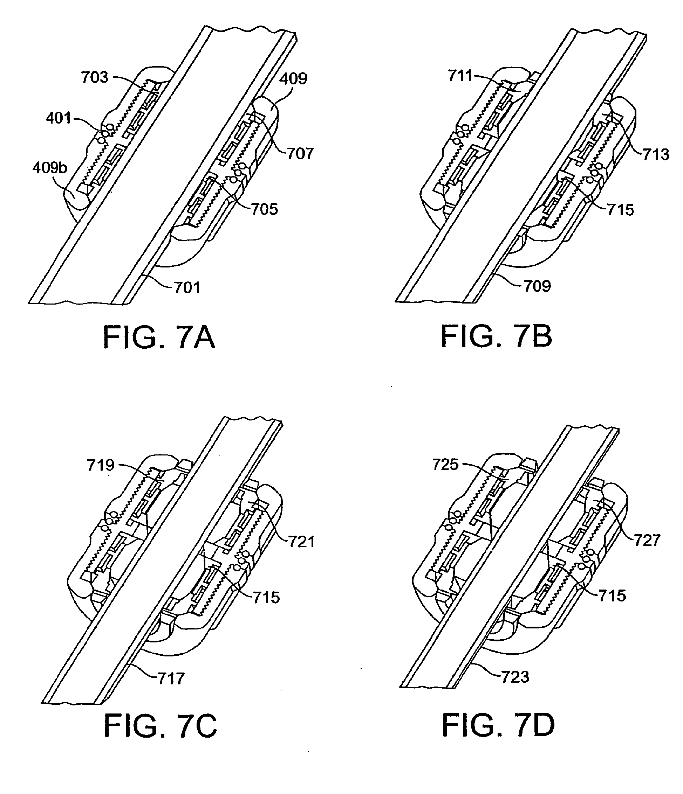

Figures 7A to 7D show how the constitutive components of the cable gland according to the present invention may be interchanged in order to provide a suitable cable gland system for cables of different sizes.

According to the present invention, the gland caps, the O-rings and the central screw thread are standardised constitutive components that are not required to be changed when adapting the cable gland to be used with cables of different sizes. This means that the present invention advantageously allows that a large number of the cable gland constitutive components can be manufactured as a standard constitutive component, thus resulting in decreasing the cable gland manufacturing costs.

In order to adapt a cable gland to different cable sizes, the size of the tubular gland, the lower washer and the upper washer changes in case cables of different sizes are considered.

For example, Figure 7A shows a cable gland which is suitable for being used with a 19-way blown optical fibre tube 701, i.e. a fibre optic cable 701 which comprises 19 tubes, each tube containing the optical fibres thereinto. The cable gland comprises a standard sized central screw thread 401 and standard sized gland caps 409a, 409b. On the contrary, the cable gland comprises tubular glands 703, lower washers 705 and upper washers 707 which are suitable for a 19-way blown optical fibre tube 701 since they are specifically adapted to provide a suitable circumferential grip around said cable when the cable gland is fit.

Figure 7B shows a cable gland according to the present invention which is suitable for being used with a 12-way blown fibre tube 709. The gland caps, central screw thread and O-rings are identical to those which are used for the 19-way blown optical fibre tube 701 mentioned above. However, the upper washers 713, the lower washers 715 and the tubular glands 711 need to be replaced by different sized components with respect to Figure 7A. In detail, the tubular gland 711 has smaller internal and external diameter than those possessed by the tubular gland 703 suitable for a 19-way blown optical fibre tube 701.

Additionally, the lower washers 715 have dimensions, such as the internal diameter, specifically adapted for being used with 4, 7 and 12-way blown fibre tubes. Moreover, the protrusions 1001 that are arranged around the circumference of the lower washers, are adapted so that the outer diameter portion of the lower washers can abut against the inner surface of the central screw thread.

Furthermore, the upper washers have dimensions, such as the internal, diameter, specifically adapted for being used with a 12-way blown fibre tube. The thickness of the wall of the upper washers is increased to allow the upper washers to abut the inner surface of the central screw thread, as well as to allow the first mating surface of the gland caps to come into contact with the mating surface of the lower washers when the gland caps are screwed onto the central screw thread.

Figure 7C shows a cable gland specifically adapted for being used with a 7-way blown fibre tube 717. The cable gland comprises tubular glands 719 and upper washers 721 which are suitable for being used with a 7-way blown fibre tube 717, while the lower washers 715 are suitable for being used with a 4, 7 and 12-way blown fibre tubes. Again, the tubular gland and upper washer dimensions are adjusted to fit the 7-way blown fibre tube.

Figure 7D shows a cable gland specifically adapted for being used with a 4-way blown fibre tube 723. The cable gland includes tubular glands 719 and upper-washers 727 which are suitable for being used with a 4-way blown fibre tube 723, while the lower washers 715 are suitable for being used with a 4, 7 and 12-way blown fibre tubes. Again, the tubular gland and upper washer dimensions are adjusted to fit the 4-way blown fibre tube.

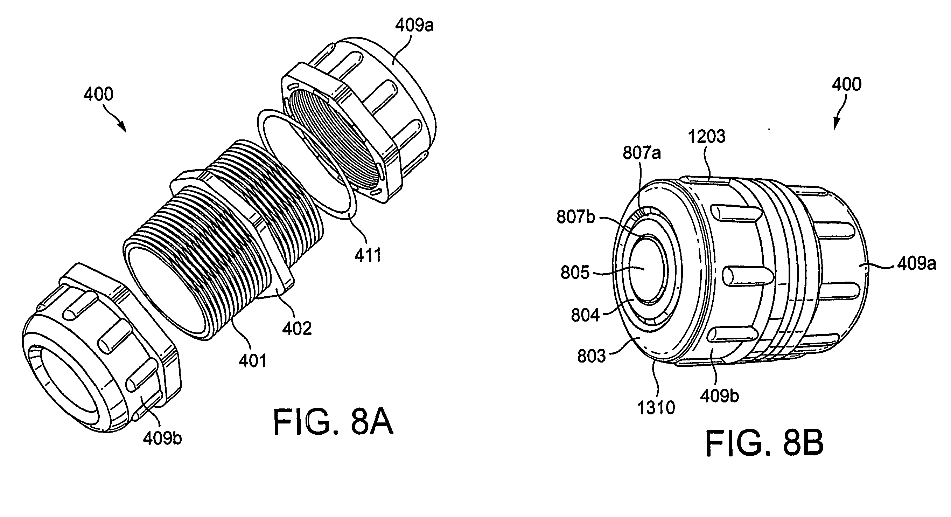

Figure 8A shows the standard constitutive components of a cable gland 400 according to the present invention. In detail, Figure 8A shows the gland caps 409a, 409b, the central screw thread 401, and the O-rings 411. According to the present invention, the use of standardised constitutive components of the cable gland reduces the number of alternative components which are required to be stocked, thereby resulting in advantageously decreasing the cable gland manufacturing, storing and transporting costs.

Figure 8B shows a perspective view of the cable gland 400 of the present invention when both gland caps 409a, 409b have been screwed onto the central screw thread 401, the interface of the equipment enclosure being not shown for clarity reasons. Each gland cap (for instance gland cap 409b in Figure 8B) includes an external end surface 1310 that is substantially perpendicular to the cable axial length to which the gland cap 409b is fit. When the cable gland 400 is fit to an interface of an equipment enclosure, the gland caps and the O-rings ensure a seal is provided between the inside and the outside of said equipment enclosure, even when a cable is not fit to the cable gland. By providing at least one convenient knock-out detachable portion on the external end surfaces of the gland caps (e.g. the external end surface 1310 of the gland cap 409b shown in Figures 8B and 13), the installer is able to provide a hole for installing the cable at the time when the cable has to be fit to the cable gland 400.

Preferably, the external end surface of the gland caps is provided with at least one concentric portion. More preferably, the external end surface of the gland caps is provided with a plurality of concentric portions (e.g. concentric portions 803, 804, 805 of the gland cap 409b are shown in Figure 8B). According to the present invention, at least one weakness line is provided to combine at least two concentric portions. Preferably, the concentric portions are easily detachable, e.g. by applying a force F (as shown in Figure 13) which is substantially perpendicular to the external end surface 1310. For instance, the force F can be applied by the installer by means of a screwdriver.

According to the preferred embodiment shown in Figures 8B and 13, the concentric portions 803, 804, 805 are circular in shape. The middle concentric portion 804 is located within the outer concentric portion 803, and it is attached to the outer concentric portion 803 by a line of weakness 807a. The inner concentric portion 805 is attached to the middle concentric portion 804 by a further line of weakness 807b.

When the cable gland is being used with smaller sized cables, such as 4 and 7-way cables, the installer knocks out the inner concentric portion 805 along its associated line of weakness 807b in order to fit the cable through the cable gland 400. On the contrary, if the cable gland is being used with larger cable sizes, such as the 12 and 19-way cables, the installer knocks out the middle concentric portion 804 along its associated line of weakness 807a.

The cable gland of the present invention allows that the seal, which is obtained when the cable gland is fit to an interface of an equipment enclosure and a cable is not associated to the cable gland, passes the IP68 Standard, said standard indicating that the equipment enclosure can sit fully immersed in water for long periods of time without letting water penetrate to the inside of the equipment enclosure.

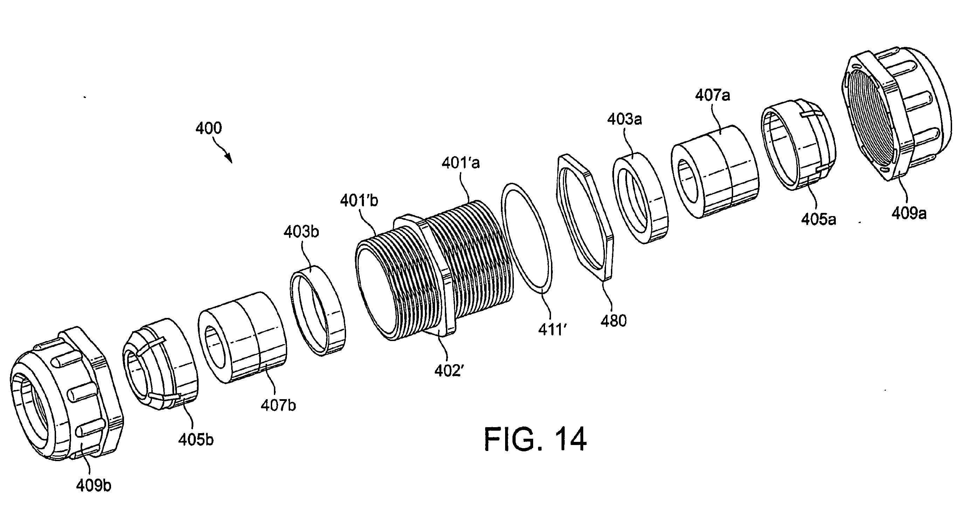

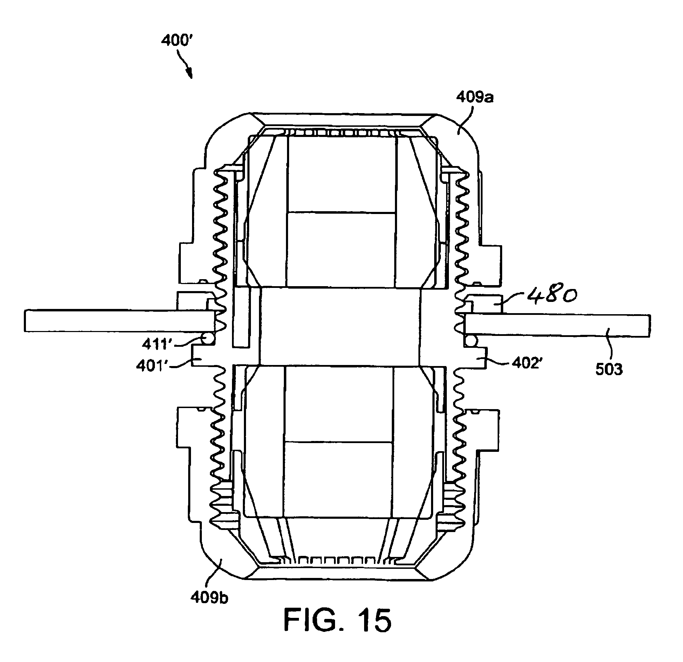

Figures 14 and 15 show a further preferred embodiment of a cable gland 400' according to the present invention. Same or similar constitutive components have been indicated with the same reference numbers.

According to the embodiment shown in Figure 14, the cable gland 400' comprises a central screw thread 401' (also referred to as central screw mount) which is provided with a flange 402'. The central screw thread 401' has a tubular shape, the outer surface of which is provided with a screw thread that is formed along the central screw thread axial length, and the flange 402' defines two tubular sections 401'a, 401'b of different longitudinal extensions. In detail, the tubular section 401'a is longer than the tubular section 401'b; preferably, the tubular section 401'a is the one that passes through the interface 503 of the equipment enclosure to which the cable gland is fit (see Figure 15). The tubular section 401'a is thus located inside the equipment enclosure, while the tubular section 401'b is placed outside the equipment enclosure.

In order to fix the cable gland 400' to the interface equipment enclosure 503, the central screw thread 401' is coupled to a lock nut 480 which is screwed onto the tubular section 401'a. As shown in Figure 15, preferably an O-ring 411' is interposed between the flange 402' and the interface 503 of the equipment enclosure so as to correctly secure the cable gland 400' in place. Alternatively, an O-ring is interposed between the interface 503 of the equipment enclosure and the first lower washer 403a.

## Claims

1. A cable gland (400; 400') comprising:
a central screw thread (401; 401');a first sealing element (407a);
a first gland cap (409a) which is screwed onto the central screw thread;
**characterised in that** the central screw thread has a tubular shape or section; and **in that** the cable gland further comprises
a first compression element (405a) within the tubular shape or section and surrounding a first portion of said first sealing element within the tubular shape or section;
a second compression element (403a) within the tubular shape or section and surrounding a second portion of said first sealing element within the tubular shape or section, said second compression element being axially aligned along the cable gland longitudinal axis with said first compression element.
wherein the first gland cap (409a) comprises a chamfered edge which defines a first mating surface (1205), and wherein the first compression element (405a) comprises a chamfered edge defining a second mating surface (1101), wherein the first mating surface (1205) is arranged to mate with the second mating surface (1101),
wherein the first compression element (405a) comprises a further chamfered edge defining a third mating surface (1004), wherein the third mating surface (1004) abuts the first axial end (450) of the first sealing element (407a).

2. The cable gland (400; 400') of claim 1, wherein the first compression element (405a) surrounds at least a first axial end (450) of said first sealing element (407a), wherein the second compression element (403a) surrounds at least a second axial end (460) of said first sealing element (407a).

3. The cable gland (400; 400') of claim 2, wherein the central screw thread (401; 401') has a tubular shape which is provided with an outer surface having a screw thread, or wherein the central screw thread (401; 401') comprises a flange (402; 402') separating the central screw thread into a first tubular section (401a; 401'a) and a second tubular section (401b; 401'b).

4. The cable gland (400; 400') according to claim 3, wherein the first gland cap (409a) is screwed onto the first tubular section (401a; 401'a) of the central screw thread (401; 401').

5. The cable gland (400; 400') of any preceding claim, wherein the chamfered edge defining the first mating surface (1205) is inclined of a predetermined angle (α) comprised from about 130° to about 140° with respect to a direction perpendicular to the axis of the first and second compression elements (405a; 403a).

6. The cable gland (400; 400') of any preceding claim, wherein the further chamfered edge defining the third mating surface (1004) is inclined of a predetermined angle (β) comprised from about 100° to about 110° with respect to a direction perpendicular to the axis of the first and second compression elements (405a; 403a).

7. The cable gland (400; 400') according to any preceding claim, wherein the second compression element (403a) comprises a chamfered edge defining a fourth mating surface (904), wherein the fourth mating surface (904) abuts the second axial end (460) of the first sealing element (407a).

8. The cable gland (400; 400') of claim 7, wherein the chamfered edge defining the fourth mating surface (904) is inclined of a predetermined angle (γ) comprised from about 55° to about 65° with respect to a direction perpendicular to the axis of the first and second compression elements (405a; 403a).

9. The cable gland (400; 400') according to claim 3, further comprising a second sealing element (407b), wherein the second sealing element (407b) is introduced into the second tubular section (401b; 401'b) of the central screw thread (401; 401'), further comprising a third compression element (405b) surrounding a first portion of said second sealing element (407b), wherein the third compression element (405b) is introduced into the second tubular section (401b; 401'b) of the central screw thread (401; 401'), further comprising a fourth compression element (403b) surrounding a second portion of said sealing element (407b), wherein the fourth compression element (403b) is introduced into the second tubular section (401b; 401'b) of the central screw thread (401; 401').

10. The cable gland (400; 400') according to claim 1, wherein the first compression element (405a) comprises a gripping element (1103) for anchoring the first compression element (405a) to a cable (501) introduced into said cable gland.

11. A cable installation comprising:
• an interface (503) for installing a cable (501) there through, said interface being provided with a bore;
• a cable passing through the bore of said interface, and
• the cable gland (400; 400') of claim 1 surrounding the cable and being coupled to said interface, the cable gland further comprising a second sealing element (407b), the first and second sealing elements being arranged on a first side and on a second side of said interface respectively.

12. A method of installing a cable (501) through an interface (503) using a cable gland as claimed in any of claims 1 to 10, said method comprising the steps of:
• passing the cable through a bore of said interface;
• providing the first sealing element (407a) to surround said cable on a first side of said interface, and
• applying a circumferential force at the axial ends (450, 460) of said first sealing element.

## Patentansprüche

1. Kabelverschraubung (400; 400'), die umfasst:
ein mittiges Schraubengewinde (401; 401');
ein erstes Dichtungselement (407a);
eine erste Verschraubungskappe (409a), die auf das mittige Schraubengewinde aufgeschraubt ist;
**dadurch gekennzeichnet, dass** das mittige Schraubengewinde eine röhrenartige Form bzw. einen röhrenartigen Abschnitt hat, und dadurch, dass die Kabelverschraubung des Weiteren umfasst:
ein erstes Kompressionselement (405a) innerhalb der röhrenartigen Form bzw. des röhrenartigen Abschnitts, das einen ersten Teil des ersten Dichtungselementes innerhalb der röhrenartigen Form bzw. des röhrenartigen Abschnitts umgibt;
ein zweites Kompressionselement (403a) innerhalb der röhrenartigen Form bzw. des röhrenartigen Abschnitts, das einen zweiten Teil des ersten Dichtungselementes innerhalb der röhrenartigen Form bzw. des röhrenartigen Abschnitts umgibt, wobei das zweite Kompressionselement entlang der Längsachse der Kabelverschraubung axial mit dem ersten Kompressionselement fluchtend ist,
wobei die erste Verschraubungskappe (409a) einen abgeschrägten Rand umfasst, der eine erste Passfläche (1205) bildet, das erste Kompressionselement (405a) einen abgeschrägten Rand umfasst, der eine zweite Passfläche (1101) bildet, und die erste Passfläche (1205) so eingerichtet ist, dass sie in Passung mit der zweiten Passfläche (1101) kommt,
und das erste Kompressionselement (405a) einen weiteren abgeschrägten Rand umfasst, der eine dritte Passfläche (110r) bildet, und die dritte Passfläche (1004) an dem ersten axialen Ende (450) des ersten Dichtungselementes (407a) anliegt.

2. Kabelverschraubung (400; 400') nach Anspruch 1, wobei das erste Kompressionselement (405a) wenigstens ein erstes axiales Ende (450) des ersten Dichtungselementes (407a) umgibt und das zweite Kompressionselement (403a) wenigstens ein zweites axiales Ende (460) des ersten Dichtungselementes (407a) umgibt.

3. Kabelverschraubung (400; 400') nach Anspruch 2, wobei das mittige Schraubengewinde (401; 401') eine Röhrenform hat, die mit einer Außenfläche versehen ist, die ein Schraubengewinde aufweist, oder das mittige Schraubengewinde (401; 401') einen Flansch (402; 402') umfasst, der das mittige Schraubengewinde in einen ersten röhrenartigen Abschnitt (401a; 401'a) und einen zweiten röhrenartigen Abschnitt (401b; 401'b) trennt.

4. Kabelverschraubung (400; 400') nach Anspruch 3, wobei die erste Verschraubungskappe (409a) auf den ersten röhrenartigen Abschnitt (401a; 401'a) des mittigen Schraubengewindes (401; 401') aufgeschraubt ist.

5. Kabelverschraubung (400; 400') nach einem der vorangehenden Ansprüche, wobei die abgeschrägte Kante, die die erste Passfläche (1205) bildet, in einem vorgegebenen Winkel (α), der von ungefähr 130 bis ungefähr 140° reicht, in Bezug auf eine Richtung senkrecht zu der Achse des ersten und des zweiten Kompressionselementes (405a; 403a) geneigt ist.

6. Kabelverschraubung (400; 400') nach einem der vorangehenden Ansprüche, wobei die weitere abgeschrägte Kante, die die dritte Passfläche (1004) bildet, in einem vorgegebenen Winkel (β), der von ungefähr 100° bis ungefähr 110° reicht, in Bezug auf eine Richtung senkrecht zu der Achse des ersten und des zweiten Kompressionselementes (405a; 403a) geneigt ist.

7. Kabelverschraubung (400; 400') nach einem der vorangehenden Ansprüche, wobei das zweite Kompressionselement (403a) eine abgeschrägte Kante umfasst, die eine vierte Passfläche (904) bildet, und die vierte Passfläche (904) an dem zweiten axialen Ende (460) des ersten Dichtungselementes (407a) anliegt.

8. Kabelverschraubung (400; 400') nach Anspruch 7, wobei die abgeschrägte Kante, die die vierte Passfläche (904) bildet, in einem vorgegebenen Winkel (γ), der von ungefähr 55° bis ungefähr 65° erreicht, in Bezug auf eine Richtung senkrecht zu der Achse des ersten und des zweiten Kompressionselementes (405a: 403a) geneigt ist.

9. Kabelverschraubung (400; 400') nach Anspruch 3, die des Weiteren ein zweites Dichtungselement (407b) umfasst, wobei das zweite Dichtungselement (407b) in den zweiten röhrenartigen Abschnitt (401 b; 401'b) des mittigen Schraubengewindes (401; 401') eingeführt ist, und die des Weiteren ein drittes Kompressionselement (405b) umfasst, das einen ersten Teil des zweiten Dichtungselementes (407b) umgibt, wobei das dritte Kompressionselement (405b) in den zweiten röhrenartigen Abschnitt (401b; 401b) des mittigen Schraubengewindes (401; 401') eingeführt ist, sie des Weiteren ein viertes Kompressionselement (403b) umfasst, das einen zweiten Teil des Dichtungselementes (407b) umgibt, und das vierte Kompressionselement (403b) in den zweiten röhrenartigen Abschnitt (401b; 401'b) des mittigen Schraubengewindes (401; 401') eingeführt ist.

10. Kabelverschraubung (400; 400') nach Anspruch 1, wobei das erste Kompressionselement (405a) ein Klemmelement (1103) zum Verankern des ersten Kompressionselementes (405a) an einem in die Kabelverschraubung eingeführten Kabel (501) umfasst.

11. Kabelinstallation, die umfasst:
• eine Schnittstelle (503) zum Installieren eines Kabels (501) über diese, wobei die Schnittfläche mit einer Bohrung versehen ist;
• ein Kabel, das durch die Bohrung der Schnittstelle hindurchtritt, und
• die Kabelverschraubung (400; 400') nach Anspruch 1, die das Kabel umgibt und mit der Schnittstelle verbunden ist, wobei die Kabelverschraubung des Weiteren ein zweites Dichtungselement (407b) umfasst und das erste sowie das zweite Dichtungselement an einer ersten Seite bzw, einer zweiten Seite der Schnittstelle angeordnet sind.

12. Verfahren zum Installieren eines Kabels (501) über eine Schnittstelle (503) unter Verwendung einer Kabelverschraubung nach einem der Ansprüche 1 bis 10, wobei das Verfahren die folgenden Schritte umfasst:
• Führen des Kabels durch eine Bohrung der Schnittstelle hindurch;
• Bereitstellen des ersten Dichtungselementes (407a), so dass es das Kabel an einer ersten Seite der Schnittstelle umgibt, und
• Ausüben einer Umfangskraft an den axialen Enden (450, 460) des ersten Dichtungselementes.

## Revendications

1. Presse-étoupe de câble (400 ; 400') comprenant :
un filetage central (401 ; 401') ; un premier élément d'étanchéité (407a) ;
un premier capuchon de presse-étoupe (409a) qui est vissé sur le filetage central ;
**caractérisé en ce que** le filetage central a un profil ou une section tubulaire ; et **en ce que** le presse-étoupe de câble comprend en outre
un premier élément de compression (405a) à l'intérieur du profil ou de la section tubulaire et entourant une première partie dudit premier élément d'étanchéité à l'intérieur du profil ou de la section tubulaire ;
un deuxième élément de compression (403a) à l'intérieur du profil ou de la section tubulaire et entourant une deuxième partie dudit premier élément d'étanchéité à l'intérieur du profil ou de la section tubulaire, ledit deuxième élément de compression étant aligné axialement le long de l'axe longitudinal du presse-étoupe de câble avec ledit premier élément de compression,
dans lequel le premier capuchon de presse-étoupe (409a) comprend un bord chanfreiné qui définit une première surface d'accouplement (1205), et dans lequel le premier élément de compression (405a) comprend un bord chanfreiné définissant une deuxième surface d'accouplement (1101), dans lequel la première surface d'accouplement (1205) est agencée pour s'accoupler avec la deuxième surface d'accouplement (1101),
dans lequel le premier élément de compression (405a) comprend un autre bord chanfreiné définissant une troisième surface d'accouplement (1004), dans lequel la troisième surface d'accouplement (1004) vient en butée contre la première extrémité axiale (450) du premier élément d'étanchéité (407a).

2. Presse-étoupe de câble (400 ; 400') selon la revendication 1, dans lequel le premier élément de compression (405a) entoure au moins une première extrémité axiale (450) dudit premier élément d'étanchéité (407a), dans lequel le deuxième élément de compression (403a) entoure au moins une deuxième extrémité axiale (460) dudit premier élément d'étanchéité (407a).

3. Presse-étoupe de câble (400 ; 400') selon la revendication 2, dans lequel le filetage central (401 ; 401') a un profil tubulaire qui est pourvu d'une surface extérieure ayant un filetage, ou dans lequel le filetage central (401 ; 401') comprend une collerette (402, 402') séparant le filetage central en une première section tubulaire (401a ; 401'a) et une deuxième section tubulaire (401b ; 401'b).

4. Presse-étoupe de câble (400 ; 400') selon la revendication 3, dans lequel le premier capuchon de presse-étoupe (409a) est vissé sur la première section tubulaire (401a ; 401'a) du filetage central (401 ; 401').

5. Presse-étoupe de câble (400 ; 400') selon l'une quelconque des revendications précédentes, dans lequel le bord chanfreiné définissant la première surface d'accouplement (1205) est incliné d'un angle prédéterminé (α) compris entre environ 130° et environ 140° par rapport à une direction perpendiculaire à l'axe des premier et deuxième éléments de compression (405a ; 403a).

6. Presse-étoupe de câble (400 ; 400') selon l'une quelconque des revendications précédentes, dans lequel l'autre bord chanfreiné définissant la troisième surface d'accouplement (1004) est incliné d'un angle prédéterminé (ß) compris entre environ 100° et environ 110° par rapport à une direction perpendiculaire à l'axe des premier et deuxième éléments de compression (405a ; 403a).

7. Presse-étoupe de câble (400 ; 400') selon l'une quelconque des revendications précédentes, dans lequel le deuxième élément de compression (403a) comprend un bord chanfreiné définissant une quatrième surface d'accouplement (904), dans lequel la quatrième surface d'accouplement (904) vient en butée contre la deuxième extrémité axiale (460) du premier élément d'étanchéité (407a) .

8. Presse-étoupe de câble (400 ; 400') selon la revendication 7, dans lequel le bord chanfreiné définissant la quatrième surface d'accouplement (904) est incliné d'un angle prédéterminé (γ) compris entre environ 55° et environ 65° par rapport à une direction perpendiculaire à l'axe des premier et deuxième éléments de compression (405a ; 403a).

9. Presse-étoupe de câble (400 ; 400') selon la revendication 3, comprenant en outre un deuxième élément d'étanchéité (407b), dans lequel le deuxième élément d'étanchéité (407b) est introduit dans la deuxième section tubulaire (401b ; 401'b) du filetage central (401 ; 401'), comprenant en outre un troisième élément de compression (405b) entourant une première partie dudit deuxième élément d'étanchéité (407b), dans lequel le troisième élément de compression (405b) est introduit dans la deuxième section tubulaire (401b ; 401'b) du filetage central (401 ; 401'), comprenant en outre un quatrième élément de compression (403b) entourant une deuxième partie dudit élément d'étanchéité (407b), dans lequel le quatrième élément de compression (403b) est introduit dans la deuxième section tubulaire (401b ; 401'b) du filetage central (401 ; 401').

10. Presse-étoupe de câble (400 ; 400') selon la revendication 1, dans lequel le premier élément de compression (405a) comprend un élément de prise (1103) pour ancrer le premier élément de compression (405a) à un câble (501) introduit dans ledit presse-étoupe de câble.

11. Installation de câble comprenant :
- une interface (503) pour installer un câble (501) à travers celle-ci, ladite interface étant pourvue d'un alésage ;
- un câble passant à travers l'alésage de ladite interface, et
- le presse-étoupe de câble (400 ; 400') selon la revendication 1, entourant le câble et couplé à ladite interface, le presse-êtoupe de câble comprenant en outre un deuxième élément d'étanchéité (407b), les premier et deuxième éléments d'étanchéité étant agencés respectivement sur un premier côté et sur un deuxième côté de ladite interface.

12. Procédé d'installation d'un câble (501) à travers une interface (503) au moyen d'un presse-étoupe de câble selon l'une quelconque des revendications 1 à 10, ledit procédé comprenant les étapes suivantes :
- le passage du câble à travers un alésage de ladite interface ;
- la fourniture du premier élément d'étanchéité (407a) pour entourer ledit câble sur un premier côté de ladite interface, et
- l'application d'une force circonférentielle au niveau des extrémités axiales (450, 460) dudit premier élément d'étanchéité.
